# EUROPEAN PATENT APPLICATION

(11) **EP 0 707 797 A1**
(43) Date of publication of application: **24.04.1996**
(21) Application number: 95306040.7
(22) Date of filing: 30.08.1995
(51) Int. Cl.: A22C 17/12

(54) **Meat skinning machine and blade therefor**

(30) Priority: 17.10.1994 US 324236
(71) Applicant: Townsend, Ray T., Des Moines, Iowa 50321 (US)
(72) Inventor: Townsend, Ray T., Des Moines, Iowa 50321 (US)
(74) Representative: Thomson, Paul Anthony

(57) **Abstract**

A blade (26) (26A) for a meat skinning machine (10) has an elongated cutting edge (34) (34A), a top (28) (28A) and bottom surface (30) (30A), and opposite ends (32) (32A). The cutting edge (34) (34A) comprises a series of juxtapositioned scalloped portions (38) each having an arcuate cutting edge (39) and a concaved inclined portion (30). A straight inclined edge (42) is located between each scalloped portion. Each inclined edge (42) has a forward end intersecting with each arcuate cutting edge to create a forwardly protruding point (44) (50). The bottom surface of the blade (30) (30A) is flat and dwells in a single flat plane with said arcuate cutting edges (30) (34A). The blade (26) (26A) is used in conjunction with a gripping roll (16) (16A) having helically arranged teeth (17A).

## Description

### BACKGROUND OF THE INVENTION

Blades for meat skinning machines typically have a length coextensive with the gripping roll of the machine. A straight tapered cutting edge on the blade severs the skin on meat products from the fat and lean meat, and the severed skin is pulled away from the lean meat by the gripping roll.

Among the shortcomings of these existing blades is that they are difficult to start in the skinning process. Sometimes, the blade shoe must be opened slightly to start the skinning operation. Also, such blades take a relative thicker cut of skin, which decreases the yield from the meat product. When these blades encounter a wrinkle in the skin, a patch of skin is commonly left on the lean meat.

Further, existing machines have difficulty keeping the teeth of the gripping roll clean. A blast of air on the gripping roll is used, but this does not create effective cleaning of meat particles from the roll. It is advantageous to use helically arranged teeth on the gripping roll for easier cleaning, but it is difficult to start the skinning operation with a straight blade, because the skin has a tendency to slip laterally.

Therefore, a principal object of this invention is to provide a blade for a meat skinning machine which can be easily started in the skinning operation.

A further object of this invention is to provide a blade for a meat skinning machine which can sever a relatively thin layer of skin.

A still further object of this invention is to provide a blade for a meat skinning machine which will sever wrinkled skin without leaving patches of skin on the meat product.

A still further object of this invention is to provide a blade for meat skinning machines which will permit the skinning operation to easily start even when helical teeth are used on the gripping roll.

These and other objects will be apparent to those skilled in the art.

### SUMMARY OF THE INVENTION

A blade for meat skinning machines has an elongated cutting edge, a top and bottom surface, and opposite ends. The cutting edge comprises a series of juxtapositioned scalloped portions each having an arcuate cutting edge and a concaved inclined portion. A straight inclined edge is located between each scalloped portion. Each inclined edge has a forward end intersecting with each arcuate cutting edge to create a forwardly protruding point. The bottom surface of the blade is flat and dwells in a single flat plane with said arcuate cutting edges.

### BRIEF DESCRIPTION OF THE DRAWINGS

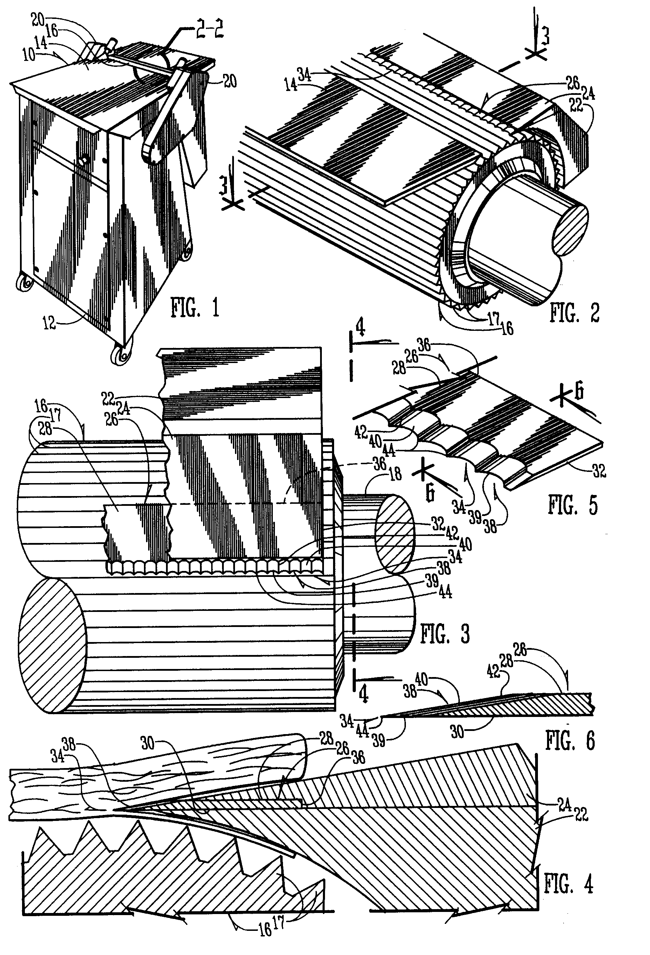

Fig 1 is a perspective view of a meat skinning machine which utilizes the blade of this invention;
Fig. 2 is an enlarged scale partial perspective view taken on line 2-2 of Fig. 1;
Fig. 3 is an enlarged scale sectional view taken on line 3-3 of Fig. 2;
Fig. 4 is an enlarged scale sectional view taken on line 4-4 of Fig. 3;
Fig. 5 is a partial perspective view of one end of the blade;
Fig. 6 is a partial sectional view taken on line 6-6 of Fig. 5;
Fig. 7 is a partial elevational view of an alternate form of gripping roll;
Fig. 8 is a sectional view taken on line 8-8 of Fig. 7; and
Fig. 9 is a partial perspective view of one end of an alternate blade.

### DESCRIPTION OF THE PREFERRED EMBODIMENT

The term meat as used herein includes meat in the traditional sense, such as pork bellies or the like, but also poultry and fish products.

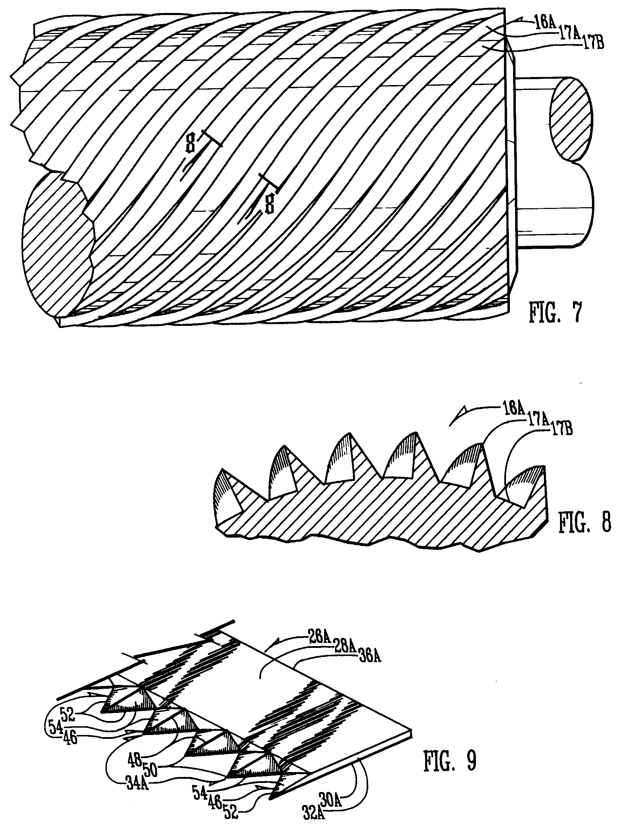

The numeral 10 designates a conventional skinning machine having a frame 12 and a top surface 14 used to support or guide meat products towards the skinning blade. The numeral 16 designates a conventional gripping roll having a plurality of elongated teeth 17 thereon. Gripping roll 16 is mounted on rotatable shaft 18 which in turn is rotatably mounted on frame 12. Housings 20 include a source of rotational power, not shown, which is adapted to rotate gripping roll 16 with shaft 18. The numeral 22 designates a conventional shoe as used on skinning machines having a conventional blade holder 24. Figs. 7 and 8 show an alternate gripping roll 16A having helically positioned teeth 17A disposed at 45° to the axis of roll 16, with valleys 17B therebetween.

The blade of this invention is designated by the numeral 26 and has a flat top surface 28, a bottom surface 30, and square ends 32 (Fig. 5). A forward cutting edge 34 is opposite the rear edge 36 of the blade.

The cutting edge includes a plurality of juxtapositioned scalloped portions 38 comprised of arcuate cutting edges 39 which are in the flat plane of bottom surface 30. Each scalloped portion also includes a concaved shaped inclined portion 30. Each scalloped portion is separated by straight inclined edges 42. The inclined edges 42 intersect the ends of the arcuate cutting edges 39 to create forwardly protruding points 44.

It has been determined that the blade 26 with its special cutting edge 34 is much easier to start the cutting operation than is a straight blade. The arcuate cutting edges 39 reduce the blade resistance between adjacent points 44 and permit the skinning operation to be more easily started.

Further, the teeth on the blade represented by each scalloped portion better directs the skin into the blade. Blade 26 permits the taking of a thinner skin portion which results in better yield for the product. The blade also prevents portions of the skin from "cutting out", particularly when a wrinkle in the skin is encountered. It is no longer necessary to have to open shoe 22 in order to start the skinning operation. The blade of this invention permits the skinning operation to easily start whether the teeth on the gripping roll are straight (17) or helically disposed (17A).

The alternate blade 26A shown on Fig. 9 has a flat top surface 28A, a flat bottom surface 30A, and square ends 32A. A forward cutting edge 34A is opposite the rear edge 36A of the blade. The cutting edge 34A includes a plurality of juxtapositioned triangular shaped pointed teeth 46. Each tooth has a center crown edge 48 which extends forwardly and downwardly from the plane of top surface 28A and terminates at point 50 in the plane of bottom surface 30A. Cutting edges 52 extend outwardly on an angular line to also terminate at point 50, thus creating laterally tapered surface 54 at each side of crown edge 48. The bottom surface of teeth 46 is in the same flat plane as bottom surface 30A. This blade has good starting qualities like that of blade 26 (Fig. 5). Both blades 26 and 26A will start well even when used with the helical teeth 17A of gripping roll 16A (Fig. 7).

From the foregoing, it is seen that the blade of this invention will achieve at least all of its stated objectives.

## Claims

1. A meat skinning machine, comprising,
a frame, a meat gripping roll on said frame, power means on said frame for rotating said meat gripping roll, an elongated blade on said frame adjacent said meat gripping roll, and having a cutting edge, said cutting edge comprising a series of juxtapositioned scalloped portions each having an arcuate cutting edge, said gripping roll having a plurality of helically positioned teeth on the outer surface thereof.

2. The device of claim 1 wherein a straight inclined edge is located between each scalloped portion.

3. The device of claim 1 wherein said scalloped portions have a concave-shaped inclined portion.

4. The device of claim 1 wherein a straight inclined edge is located between each scalloped portion, each straight inclined edge has a forward end, with each arcuate cutting edge intersecting the forward end of adjacent straight inclined edges to create a forwardly protruding point.

5. The device of claim 1 wherein said gripping roll has a plurality of helically positioned teeth on the outer surface thereof.

6. The device of claim 5 wherein said teeth are aligned at an angle of about 45° with respect to the rotational axis of said gripping roll.

7. A meat skinning machine, comprising, a frame, a meat gripping roll on said frame, power means on said frame for rotating said meat gripping roll, an elongated blade on said frame adjacent said meat gripping roll, and having a cutting edge, said cutting edge comprising a series of juxtapositioned scalloped portions, said gripping roll having a plurality of helically positioned teeth on the outer surface thereof.

8. A meat skinning machine, comprising, a frame, a meat gripping roll on said frame, power means on said frame for rotating said meat gripping roll, an elongated blade on said frame adjacent said meat gripping roll, and having a cutting edge, an upper surface, a lower surface, and a rearward edge, said cutting edge comprising a plurality of juxtapositioned teeth having a center crown edge extending forwardly and downwardly from the plane of the upper surface to a point in the plane of the lower surface, and cutting edges in the plane of said lower surface extending angularly outwardly and terminating at said point to create laterally tapered surfaces at each side of said crown edge, said gripping roll having a plurality of helically positioned teeth on the outer surface thereof.

9. A meat skinning machine comprising, a frame, a meat gripping roll on said frame, power means on said frame for rotating said meat gripping roll, an elongated blade on said frame adjacent said meat gripping roll, and having a cutting edge, said cutting edge comprising a series of juxtapositioned teeth having forwardly protruding points, said gripping roll having a plurality of helically positioned teeth on the outer surface thereof.
